# EUROPÄISCHE PATENTSCHRIFT

(11) **EP 1 233 883 B1**
(45) Veröffentlichungstag und Bekanntmachung des Hinweises auf die Patenterteilung: **02.05.2003**
(21) Anmeldenummer: 00993250.0
(22) Anmeldetag: 01.12.2000
(51) Int. Cl.: B60Q 1/14

(54) **LENKSTOCKSCHALTER**
STEERING COLUMN SWITCH
COMMUTATEUR DE COLONNE DE DIRECTION

(30) Priorität: 04.12.1999 DE 19958507
(43) Veröffentlichungstag der Anmeldung: 28.08.2002
(73) Patentinhaber: Delphi Technologies Inc., Troy, MI 48007 (US)
(72) Erfinder: RUDOLPH, Gerd, 55459 Aspisheim (DE); BESIER, Holger, 65375 Oestrich-Winkel (DE)
(74) Vertreter: Becker, Bernd, Dipl.-Ing.
(86) Internationale Anmeldenummer: DE0004307
(87) Internationale Veröffentlichungsnummer: WO01040020

(56) Entgegenhaltungen:
- EP-A- 0 861 753
- DE-A- 2 810 790
- DE-C- 4 428 883
- FR-A- 2 749 240

## Beschreibung

Die Erfindung bezieht sich auf einen Lenkstockschalter eines Kraftfahrzeuges mit mindestens einem Einzelschalter, dessen schwenkbar gelagerter Schalthebel über mindestens ein Schaltkontakte aufweisendes Schaltglied Anschlußkontakte beaufschlagt, wobei der Schalthebel zweiteilig ausgeführt und aus einem mit dem Schaltglied zusammenwirkenden Fuß sowie einem in den Fuß eingesteckten Griffstück zusammengesetzt ist.

Die EP-A-0 845 389 offenbart einen Lenkstockschalter mit einem Gehäuse, in dem zumindest ein Betätigungshebel schwenkund/oder verschiebbar gelagert ist, für den bei der Montage unterschiedliche Betätigungshebeltypen mit einer jeweiligen Kontakteinrichtung einsetzbar sind. Im Gehäuse des Lenkstockschalters ist eine Gegenkontakteinrichtung mit einer vordefinierten Anzahl von Schaltfunktionen angeordnet, die mit der Kontakteinrichtung des Betätigungshebels zusammenwirkt. Die zur Verfügung gestellte Auswahl von Schaltfunktionen ist vom Typ des zu montierenden Betätigungshebels und dessen Kontakteinrichtung abhängig.

Im weiteren zeigt die DE-A-43 32 748 einen Lenkstockschalter mit einem wenigstens in einer Ebene zur Lenksäule beweglich in einem Gehäuse gelagerten Schalthebel, der mit auf einer Leiterplatte angeordneten Schaltelementen zu deren Betätigung in Wirkverbindung steht. Mindestens eines der Schaltelemente ist als optisches Lichtsende- oder Lichtempfangselement ausgebildet, das in optischer Verbindung mit einem entsprechenden, durch den Schalthebel betätigbaren optischen Schalter steht.

Ferner sind Lenkstockschalter bekannt, deren in einem Schalthebel integrierte Schalter über eine entsprechende Verdrahtung mit einer Leiterplatte des Lenkstockschalters in Verbindung stehen, wobei der Schalthebel in einem zweiteiligen Gehäuse des Lenkstockschalters gelagert ist, dessen Trennung im Bereich des Schalthebels verläuft. Ein derartiger Schalthebel muß in seinem Inneren einen entsprechenden Freiraum zu Verfügung stellen, um die Durchführung der Verdrahtung zu ermöglichen, was eine relativ große Dimensionierung des Schalthebels bedingt. Im weiteren bringt die Verdrahtung sowohl innerhalb des Schalthebels als auch die Verdrahtung des Schalthebels mit der zugeordneten Leiterplatte einen erheblichen Montageaufwand mit sich. Die Lenkstockschalter werden mitsamt zugeordnetem Schalthebel vormontiert und anschließend im Kraftfahrzeug installiert, wodurch eine erhebliche Gefahr der Beschädigung des Schalthebels während des Hantierens mit den Lenkstockschaltern besteht.

Schließlich offenbart die DE 44 28 883 C1 einen Lenkstockschalter mit den Merkmalen des Oberbegriffes des Anspruchs 1. Aufnahmen für Einzelschalter sind im Gehäuse des Lenkstockschalters vorgesehen. Der Einzelschalter umfasst ein Schaltergehäuse, in dem ein Schalthebel schwenkbar gelagert ist. An das Schaltergehäuse sind Führungselemente zu dessen lagegerechter Ausrichtung und Halterung in einer Aufnahmekammer des Gehäuses angeformt. Im Weiteren weist das Schaltergehäuse Klipselemente zur Festlegung des Schalters in der zugeordneten Aufnahmekammer auf. Der Schalter ist mit Funktionselementen versehen und mit einer Leiterplatte bestückt, die eine zentrale Leiterplatte des Lenkstockschalters kontaktiert.

Es ist Aufgabe der Erfindung, einen Lenkstockschalter der eingangs genannten Art zu schaffen, der von seinen Funktionen variabel einsetzbar, kostengünstig zu fertigen und bei der Montage leicht zu handhaben ist.

Erfindungsgemäß wird die Aufgabe dadurch gelöst, daß der Fuß des Schalthebels kreuzgelenkig gelagert und mit zwei gegenüberliegenden Klipsarmen versehen ist, die in korrespondierende Klipsöffnungen des Griffstückes eingreifen.

Aufgrund der zweiteiligen Ausführung des Schalthebels ist die Schaltmechanik des Lenkstockschalters unabhängig von dessen Schaltfunktionen in einer großen Stückzahl kostengünstig zu fertigen. Die Zuordnung der Schaltfunktionen zu dem beispielsweise mit einer zentralen Leiterplatte versehenen Lenkstockschalter erfolgt mittels einer entsprechenden Programmierung des Bordcomputers des Kraftfahrzeuges. Um dem Bediener des Lenkstockschalters die dem Lenkstockschalter zugewiesenen Schaltfunktionen zu veranschaulichen, wird in den Fuß des Schalthebels ein mit einer entsprechenden Symbolik versehenes Griffstück eingesteckt. Das Einstecken des Griffstückes in den Fuß kann am Ende der Montage des Lenkstockschalters in das Kraftfahrzeug erfolgen, weshalb das Griffstück lediglich einer geringen Gefahr von Beschädigungen während der Montage ausgesetzt ist. Des weiteren ist die Anordnung eines einteiligen Gehäuses für den Lenkstockschalter möglich, das lediglich mit einer entsprechenden Öffnung für das Griffstück zu versehen ist. Durch das einteilige Gehäuse wird eine optisch ansprechende Wirkung erzielt. Darüber hinaus werden sowohl eine schnelle dauerhafte Montage als auch mehrere Freiheitsgrade des Schalthebels erreicht.

Bevorzugt ist in den Schalthebel mindestens ein zusätzlicher Schalter integriert, wobei das in den Fuß eingesetzte Ende des Griffstückes Kontaktbahnen aufweist, die die Funktionen des Schalters über eine Kontakteinheit zu den Anschlußkontakten übertragen. Aufgrund dieser Maßnahmen ist eine Vorfertigung der Schaltmechanik des Lenkstockschalters mitsamt der Kontakteinheit und dem Fuß des Schalthebels in einer relativ großen Stückzahl sichergestellt. Unterschiedliche, in den Fuß des Schalthebels einsteckbare Griffstücke können mit jeweils mindestens einem beliebig gestalteten Schalter ausgestattet sein. Beispielsweise ist dem Griffstück für einen Wischer/Wascherschalter ein Schalter für Intervall-Funktionen des Wischers zugeordnet. Zusätzlich oder alternativ ist ein Schalter zur Ansteuerung eines Bordcomputers vorgesehen, wobei der oder die Schalter mit den in das Griffstück integrierten Kontaktbahnen zusammenwirken und die elektrische Verbindung zu den Anschlußkontakten für den/die Schalter durch einfaches Einstecken des Griffstückes in den Fuß über die Kontakteinheit erzielt wird.

Zur einfachen kreuzgelenkigen Lagerung des Schalthebels sowie zur Realisierung von Schaltfunktionen ist zweckmäßigerweise der Fuß des Schalthebels schwenkbar in einer Öffnung eines Schenkels eines L-förmigen Drehschaltgliedes gelagert, wobei das Drehschaltglied in einen Schenkel eines gehäusefesten Z-förmigen Trägers eingesetzt ist. Somit entfällt die Anordnung zusätzlicher Lagerungen für den Schalthebel, da in das Drehschaltglied entsprechende Lagerstellen integriert sind.

Bevorzugt ist der parallel zu dem Steg des Trägers verlaufende Schenkel des Drehschaltgliedes mit einer stirnseitigen Rastkurve versehen, die mit einer federbelasteten Rasthülse in dem der Stirnseite des Drehschaltgliedes zugewandten Schenkel des Trägers zusammenwirkt. Hierdurch wird eine Ausgangsposition des kreuzgelenkig gelagerten Schalthebels definiert und ein erwünschtes Schaltgefühl bei dessen Betätigung erzeugt. Zweckmäßigerweise umfaßt der die Rasthülse für das Drehschaltglied tragende Schenkel des Trägers eine weitere federbelastete Rasthülse, die mit einer Rastkurve in der freien Stirnseite des Fußes zusammenwirkt. Hierdurch wird der Schalthebel in einer bestimmten Ausgangslage gehalten. Das Verschwenken des Schalthebels aus der Ausgangslage erfolgt gegen die Federkraft, mit der die Rasthülse beaufschlagt ist, wodurch ein entsprechendes Schaltgefühl erzeugt wird.

Nach einer vorteilhaften Weiterbildung der Erfindung lagert der die Rasthülsen tragende Schenkel des Trägers ein von dem Fuß des Schalthebels beaufschlagtes Schiebeschaltglied. Der Träger stellt somit ein wesentliches Bauteil zur Aufnahme des Schiebeschaltgliedes sowie des Drehschaltgliedes dar und bildet mit den zugeordneten Schaltgliedern eine separate Baugruppe, die einfach zu montieren und auszutauschen ist.

Zweckmäßigerweise sind die Schalkontakte des Drehschaltgliedes und des Schiebeschaltgliedes als Kontaktfedern ausgeführt und beaufschlagen zugeordnete Kontaktbahnen des Trägers, die mit den Anschlußkontakten in Verbindung stehen. Die Kontaktfedern sind Bestandteile jeweils eines in das Drehschaltglied und das Schiebeschaltglied eingelassenen Stanzgitters, das bei der Fertigung der Schaltglieder im Spritzgußverfahren gleichzeitig umspritzt wird, so daß ein zusätzlicher Montageschritt entfällt.

Um eine Beschädigung des Griffstückes und des Fußes während des Zusammenfügens zu vermeiden, weist das Griffstück an der in den Fuß eingesetzten Stirnseite einen Zentrieransatz auf, der in eine entsprechende Zentrierbohrung des Fußes eingreift.

Nach einer vorteilhaften Ausgestaltung des Erfindungsgedankens sind die Kontaktbahnen des Griffstückes freiliegende Bereiche eines in das Griffstück integrierten Stanzgitters, das dem Schalter zugeordnet ist. Somit entfällt eine relativ aufwendige Verdrahtung des Schalters mit den Kontaktbahnen und durch eine entsprechende Codierung des in das Griffstück eingelassenen Stanzgitters ist eine Vielzahl von zu übertragenden Schaltfunktionen möglich.

Um eine kostengünstige Kontakteinheit bereitzustellen, die eine relativ hohe Funktionssicherheit aufweist und einen Toleranz- sowie Bewegungsausgleich sicherstellt, weist bevorzugt die Kontakteinheit als Blattfedern ausgebildete Kontaktarme auf, wobei das eine Ende jedes Kontaktarmes mit einer zugeordneten Kontaktbahn des Stanzgitters des Griffstückes und das andere Ende des Kontaktarmes mit einer zugeordneten Kontaktbahn des Trägers in Verbindung steht. Hierbei durchragen die die Kontaktbahnen des Trägers beaufschlagenden Kontaktarme der Kontakteinheit eine Aussparung des im Träger gelagerten Drehschaltgliedes.

Nach einer Weiterbildung der Erfindung umfaßt die Kontakteinheit seitlich begrenzende Schenkel, die sich im wesentlichen parallel zu den Kontaktarmen erstrecken. Jeder Schenkel der Kontakteinheit weist endseitig einen zylindrischen Ansatz auf, wobei die gegenüberliegenden Ansätze an dem einen Ende der Kontakteinheit in eine entsprechende Aussparung des Drehschaltgliedes und die Ansätze an dem anderen Ende der Kontakteinheit in eine korrespondierende Aussparung des Fußes eingreifen. Die Kontakteinheit stellt somit eine kompakte Baugruppe dar, die relativ einfach zwischen dem Drehschaltglied und dem Fuß festzulegen ist.

Zweckmäßigerweise sind die Aussparungen im Drehschaltglied, in die die Ansätze des Schenkels der Kontakteinheit eingreifen, zylindrische Bohrungen. Weiterhin sind bevorzugt die Aussparungen im Fuß des Schalthebels, in die die Ansätze des Schenkels der Kontakteinheit eingreifen, Langlöcher. Durch diese Maßnahmen ist eine Ausgleichsbewegung der Kontakteinheit bei der Schwenkbewegung des Schalthebels zur Beaufschlagung des Schiebeschaltgliedes gewährleistet. Hierbei erfolgt durch ein Schleifen der Kontaktarme der Kontakteinheit auf den zugeordneten Kontaktbahnen des Griffstückes und den Kontaktbahnen des Trägers eine Selbstreinigung derselben.

Es versteht sich, daß die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand eines Ausführungsbeispieles unter Bezugnahme auf die zugehörigen Zeichnungen näher erläutert. Es zeigen:

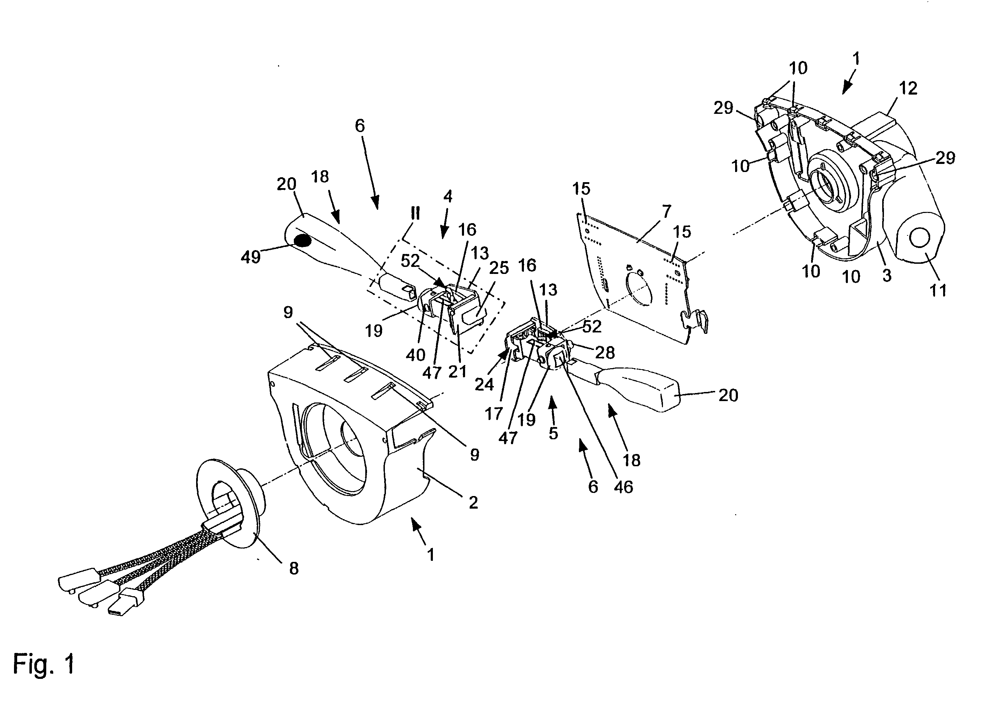

- Fig.1: eine Explosionsdarstellung eines erfindungsgemäßen Lenkstockschalters,

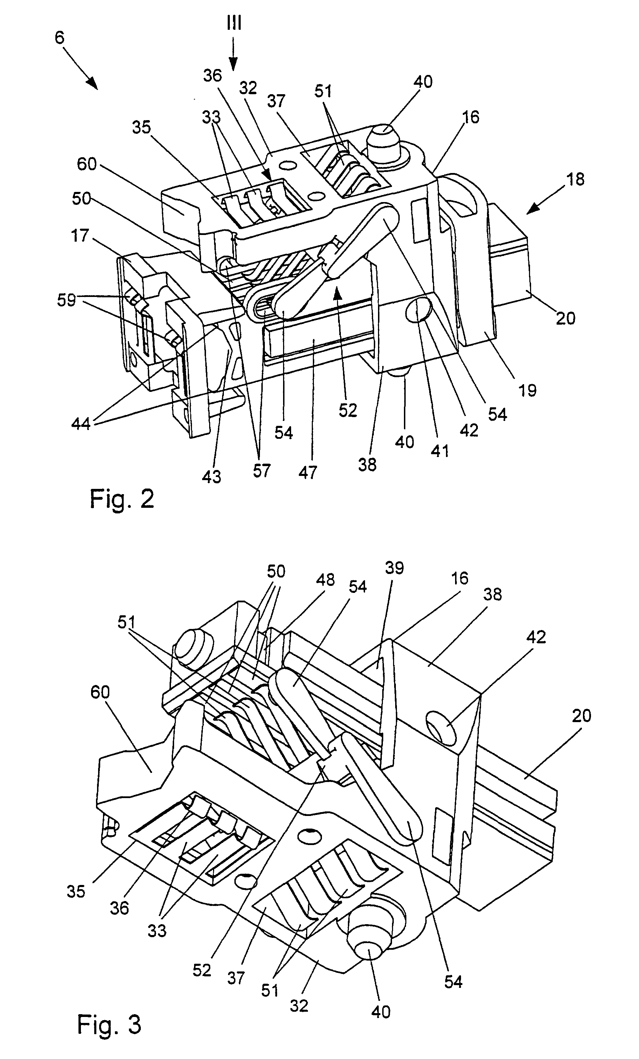

- Fig.2: eine vergrößerte Darstellung einer Einzelheit II nach Fig. 1,
- Fig.3: eine Darstellung der Ansicht in Richtung des Pfeiles III nach Fig. 2,

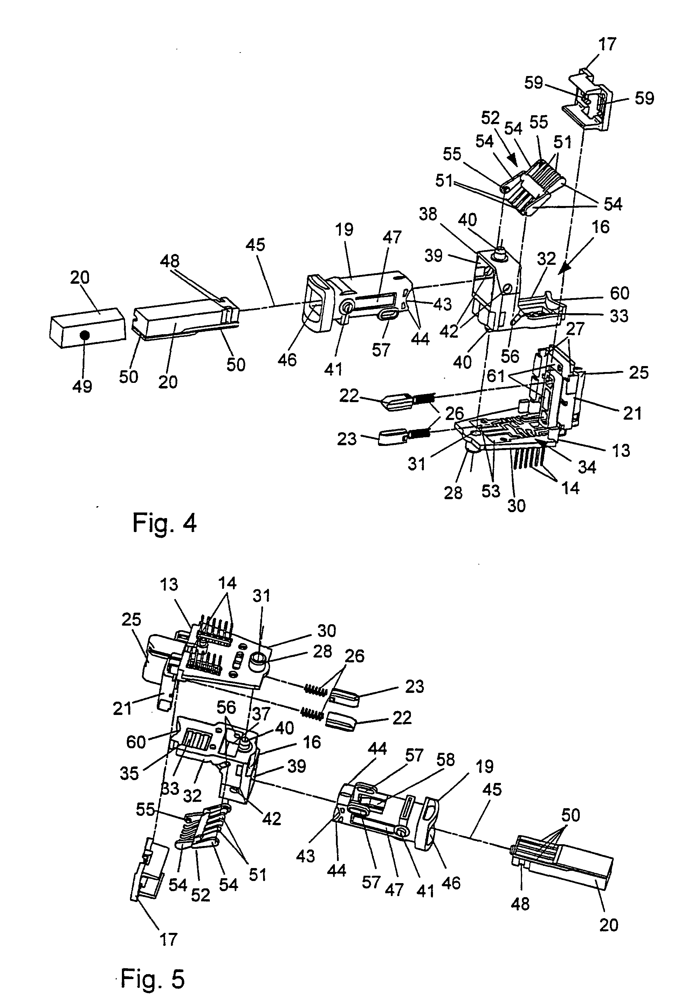

- Fig.4: eine Explosionsdarstellung einer Einzelheit II nach Fig. 1 und
- Fig.5: eine weitere Explosionsdarstellung einer Einzelheit II nach Fig. 1.

Der Lenkstockschalter umfaßt ein Gehäuse 1, das aus einem Deckel 2 und einem Trägermodul 3 besteht und jeweils einen als Blinkerschalter 4 sowie als Wischer-/Wascher-Schalter 5 ausgebildeten Einzelschalter 6 sowie eine Leiterplatte 7 aufnimmt. Auf der einem nicht dargestellten Lenkrad zugewandten Seite ist ein Übertragungselement 8 zur Ansteuerung der Funktionen eines Airbags in den Deckel 2 des Gehäuses 1 eingesetzt, das mit der Leiterplatte 7 in Verbindung steht. Auf seinem Umfang ist der Deckel 2 mit Klipsöffnungen 9 versehen, die mit korrespondierenden Klipsarmen 10 des Trägermoduls 3 Klipsverbindungen eingehen. Im weiteren umfaßt das Trägermodul 3 eine Aufnahme 11 für ein Zündschloß sowie eine Befestigungseinrichtung 12 zur Festlegung des Lenkstockschalters an einem Mantelrohr einer Lenksäule des Kraftfahrzeuges.

Der Blinkerschalter 4 und der Wischer-/Wascherschalter 5 sind identisch aufgebaut und bestehen jeweils im wesentlichen aus einem Träger 13 mit Anschlußkontakten 14, die in korrespondierende Bohrungen 15 der Leiterplatte 7 eingreifen, einem Dreh- 16 sowie Schiebeschaltglied 17 und einem kreuzgelenkig gelagerten Schalthebel 18. Der Schalthebel 18 ist zweiteilig ausgeführt und besteht aus einem Fuß 19 und einem Griffstück 20.

Der Träger 13 ist im wesentlichen Z-förmig ausgebildet und haltert in dem dem Schalthebel 18 zugewandten Schenkel 21 mittig zwei übereinanderliegende, federbelastete Rasthülsen 22, 23, die Bestandteile von Rasteinrichtungen 24 des jeweiligen Einzelschalters 6 sind. Hierzu ist an den Schenkel 21 des Trägers 13 ein Dom 25 angeformt, in den entsprechende Druckfedern 26 eingesetzt sind, die auf die Rasthülsen 22, 23 wirken. Weiterhin weist der Schenkel 21 gegenüberliegende Nuten 27 zur Führung des Schiebeschaltgliedes 17 sowie Kontaktbahnen 61 auf.

Der zweite, als Zentrieransatz ausgebildete Schenkel 28 des Trägers 13 ist in dem Trägermodul 3 des Gehäuses 1 in einer entsprechenden Ausnehmung 29 fixiert. Der die Schenkel 21, 28 verbindende Steg 30 umfaßt im Bereich des Schenkels 28 eine in den Zentrieransatz eingelassene Lagerbohrung 31 zur Lagerung des Drehschaltgliedes 16.

Das im wesentlichen L-förmige Drehschaltglied 16 weist dem langen Schenkel 32 zugeordnete Schaltkontakte 33 auf, die als Kontaktfedern ausgebildet sind und mit Kontaktbahnen 34 im Steg 30 des Trägers 13 zusammenwirken. Die Schaltkontakte 33 ragen in eine Aussparung 35 des Schenkels 32 und sind an ihren freien Enden jeweils mit einer V-förmigen Abwinklung 36 versehen, deren Spitze die zugeordnete Kontaktbahn 34 beaufschlagt. Parallel zu der Aussparung 35 für die Schaltkontakte 33 ist eine weitere Aussparung 37 in dem Schenkel 32 des Drehschaltgliedes 16 vorgesehen. In die Stirnseite des Schenkels 32 des Drehschaltgliedes 16 ist eine Rastkurve 60 eingelassen, die mit der Rasthülse 23 des Trägers 13 zusammenwirkt.

Der kurze Schenkel 38 des Drehschaltgliedes 16 umfaßt jeweils einen auf der Stirnseite und der gegenüberliegenden Seite angeformten Lagerzapfen 40, wobei der stirnseitige Lagerzapfen 40 in eine korrespondierende Lagerbohrung des Deckels 2 des Gehäuses 1 und der gegenüberliegende Lagerzapfen 40 in die Lagerbohrung 31 des Trägers 13 eingreift. Ferner ist in den kurzen Schenkel 38 eine Öffnung 39 eingelassen, in die der Fuß 19 des Schalthebels 18 schwenkbeweglich eingesetzt ist. Dazu weist der Fuß 19 seitliche Achszapfen 41 auf, die in korrespondierenden Bohrungen 42 des Schenkels 38 gelagert sind.

Des weiteren umfaßt der Fuß 19 des Schalthebels 18 an seinem freien, dem Schenkel 21 des Trägers 13 zugewandten Ende eine V-förmige Rastkurve 43, die mit der oberen Rasthülse 22 zusammenwirkt, sowie jeweils einen die Rastkurve 43 begrenzenden Betätigungsansatz 44, der das Schiebeschaltglied 17 beaufschlagt. Durch das Zusammenwirken der Rasthülse 22 mit der Rastkurve 43 des Schalthebels 18 wird dieser in einer Mittenlage gehalten, wodurch das Schiebeschaltglied 17 eine äquivalente Position einnimmt. Dem Schiebeschaltglied 17 sind Schaltkontakte 59 zugeordnet, die mit den Kontaktbahnen 61 im Schenkel 21 des Trägers 13 zusammenwirken.

In die Längsachse 45 des Fußes 19 des Schalthebels 18 ist ein im Querschnitt rechteckförmiges Sackloch 46 zur Aufnahme des Griffstückes 20 eingelassen. Die seitlichen Wandungen des Sackloches 46 werden bereichsweise von zwei gegenüberliegenden Klipsarmen 47 gebildet, die in korrespondierende Klipsöffnungen 48 des Griffstückes 20 eingreifen.

Das Griffstück 20 des als Blinkerschalter 4 ausgebildeten Einzelschalters 6 ist mit einem zusätzlichen Schalter 49 versehen, der als Tastschalter zur Ansteuerung eines nicht dargestellten Bordcomputers dient. Zur elektrischen Kontaktübertragung ist in das Griffstück 20 ein mit dem Schalter 49 verbundenes Stanzgitter integriert, das im endseitigen Bereich, der in den Fuß 19 eingesetzt wird, freiliegende Kontaktbahnen 50 umfaßt. Im Bereich der Kontaktbahnen 50 weist der Fuß 19 einen von Kontaktarmen 51 einer Kontakteinheit 52 durchragten Durchbruch 58 auf, wobei die Kontaktarme 51 zum einen mit den Kontaktbahnen 50 des Stanzgitters des Griffstückes 20 und zum anderen die Aussparung 37 des Drehschaltgliedes 16 durchragen und mit zugeordneten Kontaktbahnen 53 des Trägers 13 in Verbindung stehen.

Parallel zu den Kontaktarmen 51 der Kontakteinheit 52 sind Schenkel 54 zur Befestigung derselben an dem Fuß 19 sowie an dem Drehschaltglied 16 angeordnet. Hierzu weist jeder Schenkel 54 endseitig einen zylindrischen Ansatz 55 auf, wobei die gegenüberliegenden Ansätze 55 an dem einen Ende der Kontakteinheit 52 in korrespondierende Bohrungen 56 des Drehschaltgliedes 16 und die Ansätze 55 an dem anderen Ende der Kontakteinheit 52 in korrespondierende Langlöcher 57 des Fußes 19 eingreifen. Durch diese Lagerung der Kontakteinheit 52 ist die erforderliche Bewegungsfreiheit des Schalthebels 18 bei gleichzeitig sichergestellter Übertragung der Funktionen des Schalters 49 gewährleistet.

Nach einer Beaufschlagung des Schalters 49 in einer beliebigen Position des Schalthebels 18 des zugeordneten Einzelschalters 6 erfolgt die Übertragung des Schaltsignals über das in das Griffstück 20 integrierte Stanzgitter und dessen freiliegende Kontaktbahnen 50 zu dem einen Ende der Kontaktarme 51 der Kontakteinheit 52. Über die Kontaktarme 51 wird die Verbindung zu den Kontaktbahnen 53 des Trägers 13 und damit zu den mit den Kontaktbahnen 53 gekoppelten Anschlußkontakten 14 hergestellt. Die Anschlußkontakte 14 kontaktieren wiederum die mit dem Bordnetz verbundene Leiterplatte 7. Zur Übertragung komplexer Schaltfunktionen oder zur Zuordnung von Schalterfunktionen zu dem jeweiligen Einzelschalter 6 kann das Stanzgitter des Griffstückes 20 codiert werden, wobei die Übertragung der codierten Signale entsprechend erfolgt.

### Bezugszeichenliste

- 1.: Gehäuse
- 2.: Deckel
- 3.: Trägermodul
- 4.: Blinkerschalter
- 5.: Wischer-/Wascherschalter
- 6.: Einzelschalter
- 7.: Leiterplatte
- 8.: Übertragungselement
- 9.: Klipsöffnung
- 10.: Klipsarm
- 11.: Aufnahme
- 12.: Befestigungseinrichtung
- 13.: Träger
- 14.: Anschlußkontakt
- 15.: Bohrung
- 16.: Drehschaltglied
- 17.: Schiebeschaltglied
- 18.: Schalthebel
- 19.: Fuß
- 20.: Griffstück
- 21.: Schenkel
- 22.: Rasthülse
- 23.: Rasthülse
- 24.: Rasteinrichtungen
- 25.: Dom
- 26.: Druckfedern
- 27.: Nut
- 28.: Schenkel
- 29.: Ausnehmung
- 30.: Steg
- 31.: Lagerbohrung
- 32.: Schenkel
- 33.: Schaltkontakt
- 34.: Kontaktbahn
- 35.: Aussparung
- 36.: Abwinklung
- 37.: Aussparung
- 38.: Schenkel
- 39.: Öffnung
- 40.: Lagerzapfen
- 41.: Achszapfen
- 42.: Bohrung
- 43.: Rastkurve
- 44.: Betätigungsansatz
- 45.: Längsachse
- 46.: Sackloch
- 47.: Klipsarm
- 48.: Klipsöffnung
- 49.: Schalter
- 50.: Kontaktbahn
- 51.: Kontaktarm
- 52.: Kontakteinheit
- 53.: Kontaktbahn
- 54.: Schenkel
- 55.: Ansatz
- 56.: Bohrung
- 57.: Langloch
- 58.: Durchbruch
- 59.: Schaltkontakt
- 60.: Rastkurve
- 61.: Kontaktbahn

## Patentansprüche

1. Lenkstockschalter eines Kraftfahrzeuges mit mindestens einem Einzelschalter (6), dessen schwenkbar gelagerter Schalthebel (18) über mindestens ein Schaltkontakte (33 bzw. 59) aufweisendes Schaltglied (16 bzw. 17) Anschlußkontakte (14) beaufschlagt, wobei der Schalthebel (18) zweiteilig ausgeführt und aus einem mit dem Schaltglied (16) zusammenwirkenden Fuß (19) sowie einem in den Fuß (19) eingesteckten Griffstück (20) zusammengesetzt ist., **dadurch gekennzeichnet, daß** der Fuß (19) des Schalthebels (18) kreuzgelenkig gelagert und mit zwei gegenüberliegenden Klipsarmen (47) versehen ist, die in korrespondierende Klipsöffnungen (48) des Griffstückes (20) eingreifen.

2. Lenkstockschalter nach Anspruch 1, **dadurch gekennzeichnet, daß** in den Schalthebel (18) mindestens ein zusätzlicher Schalter (49) integriert ist, wobei das in den Fuß (19) eingesetzte Ende des Griffstückes (20) Kontaktbahnen (50) aufweist, die die Funktionen des Schalters (49) über eine Kontakteinheit (52) zu den Anschlußkontakten (14) übertragen.

3. Lenkstockschalter nach Anspruch 1 oder 2, **dadurch gekennzeichnet, daß** der Fuß (19) des Schalthebels (18) schwenkbar in einer Öffnung (39) eines Schenkels (38) eines L-förmigen Drehschaltgliedes (16) gelagert ist, wobei das Drehschaltglied (16) in einen Schenkel (28) eines gehäusefesten Z-förmigen Trägers (13) eingesetzt ist.

4. Lenkstockschalter nach Anspruch 3, **dadurch gekennzeichnet, daß** der parallel zu dem Steg (30) des Trägers (13) verlaufende Schenkel (32) des Drehschaltgliedes (16) mit einer stirnseitigen Rastkurve (60) versehen ist, die mit einer federbelasteten Rasthülse (23) in dem der Stirnseite des Drehschaltgliedes (16) zugewandten Schenkel (21) des Trägers (13) zusammenwirkt.

5. Lenkstockschalter nach Anspruch 4, **dadurch gekennzeichnet, daß** der die Rasthülse (23) für das Drehschaltglied (16) tragende Schenkel (21) des Trägers (13) eine weitere federbelastete Rasthülse (22) umfaßt, die mit einer Rastkurve (43) in der freien Stirnseite des Fußes (19) zusammenwirkt.

6. Lenkstockschalter nach den Ansprüchen 4 und 5, **dadurch gekennzeichnet, daß** der die Rasthülsen (22, 23) tragende Schenkel (21) des Trägers (13) ein von dem Fuß (19) des Schalthebels (18) beaufschlagtes Schiebeschaltglied (17) lagert.

7. Lenkstockschalter nach einem der Ansprüche 3 bis 6, **dadurch gekennzeichnet, daß** die Schalkontakte (33, 59) des Drehschaltgliedes (16) und des Schiebeschaltgliedes (17) als Kontaktfedern ausgeführt sind und zugeordnete Kontaktbahnen (34, 61) des Trägers (13) beaufschlagen, die mit den Anschlußkontakten (14) in Verbindung stehen.

8. Lenkstockschalter nach einem der Ansprüche 1 bis 7, **dadurch gekennzeichnet, daß** das Griffstück (20) an der in den Fuß (19) eingesetzten Stirnseite einen Zentrieransatz aufweist, der in eine entsprechende Zentrierbohrung des Fußes (19) eingreift.

9. Lenkstockschalter nach Anspruch 2, **dadurch gekennzeichnet, daß** die Kontaktbahnen (50) des Griffstückes (20) freiliegende Bereiche eines in das Griffstück (20) integrierten Stanzgitters sind, das dem Schalter (49) zugeordnet ist.

10. Lenkstockschalter nach Anspruch 2, **dadurch gekennzeichnet, daß** die Kontakteinheit (52) als Blattfedern ausgebildete Kontaktarme (51) aufweist, wobei das eine Ende jedes Kontaktarmes (51) mit einer zugeordneten Kontaktbahn (50) des Stanzgitters des Griffstückes (20) und das andere Ende des Kontaktarmes (51) mit einer zugeordneten Kontaktbahn (53) des Trägers (13) in Verbindung steht.

11. Lenkstockschalter nach Anspruch 10, **dadurch gekennzeichnet, daß** die die Kontaktbahnen (53) des Trägers (13) beaufschlagenden Kontaktarme (51) der Kontakteinheit (52) eine Aussparung (37) des im Träger (13) gelagerten Drehschaltgliedes (16) durchragen.

12. Lenkstockschalter nach den Ansprüchen 10 und 11, **dadurch gekennzeichnet, daß** die Kontakteinheit (52) seitlich begrenzende Schenkel (54) umfaßt, die sich im wesentlichen parallel zu den Kontaktarmen (51) erstrecken.

13. Lenkstockschalter nach Anspruch 12, **dadurch gekennzeichnet, daß** jeder Schenkel (54) der Kontakteinheit (52) endseitig einen zylindrischen Ansatz (55) aufweist, wobei die gegenüberliegenden Ansätze (55) an dem einen Ende der Kontakteinheit (52) in eine entsprechende Aussparung des Drehschaltgliedes (16) und die Ansätze (55) an dem anderen Ende der Kontakteinheit (52) in eine korrespondierende Aussparung des Fußes (19) eingreifen.

14. Lenkstockschalter nach Anspruch 13, **dadurch gekennzeichnet, daß** die Aussparungen im Drehschaltglied (16), in die die Ansätze (55) des Schenkels (54) der Kontakteinheit (52) eingreifen, zylindrische Bohrungen (56) sind.

15. Lenkstockschalter nach Anspruch 13, **dadurch gekennzeichnet, daß** die Aussparungen im Fuß (19) des Schalthebels (18), in die die Ansätze (55) des Schenkels (54) der Kontakteinheit (52) eingreifen, Langlöcher (57) sind.

## Claims

1. Steering column switch for an automotive vehicle, having at least one individual switch (6), the pivotably mounted switching lever (18) of said individual switch acting on connection contacts (14) via at least one switching member (16 or 17 respectively), which has switching contacts (33 or 59 respectively), the switching lever (18) being in two parts and comprising a base (19), which co-operates with the switching member (16), and a handle (20) which is inserted into the base (19), **characterised in that** the base (19) of the switching lever (18) is mounted by means of a universal joint coupling and is provided with two oppositely situated clip-in arms (47), which engage in corresponding clip-in apertures (48) in the handle (20).

2. Steering column switch according to claim 1, **characterised in that** at least one additional switch (49) is incorporated in the switching lever (18), the end of the handle (20) which is inserted in the base (19) having contact paths (50) which transfer the functions of the switch (49) to the connection contacts (14) via a contact unit (52).

3. Steering column switch according to claim 1 or 2, **characterised in that** the base (19) of the switching lever (18) is pivotably mounted in an aperture (39) of a portion (38) of an L-shaped rotatable switching member (16), the rotatable switching member (16) being inserted into a portion (28) of a Z-shaped Garner (13) integral with the housing.

4. Steering column switch according to claim 3, **characterised in that** the portion (32) of the rotatable switching member (16), which extends parallel to the web (30) of the carrier (13), is provided with an end-face locking profile (60), which co-operates with a spring-loaded locking sleeve (23) in the portion (21) of the carrier (13) facing the end face of the rotatable switching member (16).

5. Steering column switch according to claim 4, **characterised in that** the portion (21) of the carrier (13), carrying the locking sleeve (23) for the rotatable switching member (16), includes an additional spring-loaded locking sleeve (22), which co-operates with a locking profile (43) in the free end face of the base (19).

6. Steering column switch according to claims 4 and 5, **characterised**
**in that** the portion (21) of the carrier (13), carrying the locking sleeves (22, 23), supports a slidable switching member (17) which is acted-upon by the base (19) of the switching lever (18).

7. Steering column switch according to one of claims 3 to 6, **characterised in that** the switching contacts (33, 59) of the rotatable switching member (16) and of the slidable switching member (17) are in the form of contact springs and act upon associated contact paths (34, 61) of the carrier (13), which paths communicate with the connection contacts (14).

8. Steering column switch according to one of claims 1 to 7, **characterised in that** the handle (20) has, at the end face inserted into the base (19), a centring extension which engages in a corresponding centring bore in the base (19).

9. Steering column switch according to claim 2, **characterised in that** the contact paths (50) of the handle (20) are exposed regions of a stamped blank, which is incorporated in the handle (20) and is associated with the switch (49).

10. Steering column switch according to claim 2, **characterised in that** the contact unit (52) has contact arms (51), which are in the form of leaf springs, one end of each contact arm (51) communicating with an associated contact path (50) of the stamped blank of the handle (20), and the other end of the contact arm (51) communicating with an associated contact path (53) of the carrier (13).

11. Steering column switch according to claim 10, **characterised in that** the contact arms (51), which act on the contact paths (53) of the carrier (13), protrude through a recess (37) in the rotatable switching member (16), which is mounted in the carrier (13).

12. Steering column switch according to claims 10 and 11, **characterised in that** the contact unit (52) includes laterally defining portions (54), which extend substantially parallel to the contact arms (51).

13. Steering column switch according to claim 12, **characterised in that** each portion (54) of the contact unit (52) has a cylindrical extension (55) at its end, the oppositely situated extensions (55) at one end of the contact unit (52) engaging in a corresponding recess in the rotatable switching member (16), and the extensions (55) at the other end of the contact unit (52) engaging in a corresponding recess in the base (19).

14. Steering column switch according to claim 13, **characterised in that** the recesses in the rotatable switching member (16) are cylindrical bores (56), in which the extensions (55) of the portion (54) of the contact unit (52) engage.

15. Steering column switch according to claim 13, **characterised in that** the recesses in the base (19) of the switching lever (18) are elongate slots (57), in which the extensions (55) of the portion (54) of the contact unit (52) engage.

## Revendications

1. Commutateur de colonne de direction d'un véhicule automobile, avec au moins un commutateur individuel (6) dont le levier de commutation monté à pivotement (18) sollicite des contacts de connexion (14) par l'intermédiaire d'au moins un organe de commutation (16, respectivement 17) comportant des contacts de commutation (33, respectivement 59), le levier de commutation (18) étant conçu en deux parties et constitué d'un pied (19) coopérant avec l'organe de commutation (16) ainsi que d'une pièce de préhension (20) enfoncée dans le pied (19), **caractérisé en ce que** le pied (19) du levier de commutation (18) est monté avec une articulation à joint de cardan et muni de deux bras clipsés en vis-à-vis (47) qui s'engagent dans des ouvertures de clipsage correspondantes (48) de la pièce de préhension (20).

2. Commutateur de colonne de direction selon la revendication 1, **caractérisé en ce qu'**au moins un commutateur supplémentaire (49) est intégré au levier de commutation (18), l'extrémité de la pièce de préhension (20) insérée dans le pied (19) comportant des pistes de contact (50) qui transmettent les fonctions du commutateur (49) aux contacts de connexion (14) par l'intermédiaire d'une unité de contact (52).

3. Commutateur de colonne de direction selon la revendication 1 ou 2, **caractérisé en ce que** le pied (19) du levier de commutation (18) est monté à pivotement dans une ouverture (39) d'une branche (38) d'un organe de commutation rotatif en forme de L (16), l'organe de commutation rotatif (16) étant inséré dans une branche (28) d'un support en forme de Z (13) solidaire du boîtier.

4. Commutateur de colonne de direction selon la revendication 3, **caractérisé en ce que** la branche (32) de l'organe de commutation rotatif (16) s'étendant parallèlement à la barrette (30) du support (13) est munie d'une courbe de crantage frontale (60) qui coopère avec une douille de crantage à sollicitation élastique (23) dans la branche (21) du support (13) tournée vers le côté frontal de l'organe de commutation rotatif (16).

5. Commutateur de colonne de direction selon la revendication 4, **caractérisé en ce que** la branche (21) du support (13) portant la douille de crantage (23) pour l'organe de commutation rotatif (16) comprend une autre douille de crantage à sollicitation élastique (22), laquelle coopère avec une courbe de crantage (43) dans le côté frontal libre du pied (19).

6. Commutateur de colonne de direction selon les revendications 4 et 5, **caractérisé en ce que** la branche (21) du support (13) portant la douille de crantage (22, 23) comporte un organe de commutation coulissant (17) sollicité par le pied (19) du levier de commutation (18).

7. Commutateur de colonne de direction selon une des revendications 3 à 6, **caractérisé en ce que** les contacts de commutation (33, 59) de l'organe de commutation rotatif (16) et de l'organe de commutation coulissant (17) sont conçus sous la forme de ressorts de contact et sollicitent des pistes de contact associées (34, 61) du support (13), lesquelles sont reliées aux contacts de connexion (14).

8. Commutateur de colonne de direction selon une des revendications 1 à 7, **caractérisé en ce que** la pièce de préhension (20) sur le côté frontal inséré dans le pied (19) comporte un plot de centrage qui s'engage dans un trou de centrage correspondant du pied (19).

9. Commutateur de colonne de direction selon la revendication 2, **caractérisé en ce que** les pistes de contact (50) de la pièce de préhension (20) sont des zones apparentes d'une grille estampée intégrée à la pièce de préhension (20) et associée au commutateur (49).

10. Commutateur de colonne de direction selon la revendication 2, **caractérisé en ce que** l'unité de contact (52) comporte des bras de contact (51) conformés en ressorts à lames, l'une des extrémités de chaque bras de contact (51) étant reliée à une piste de contact associée (50) de la grille estampée de la pièce de préhension (20) et l'autre extrémité du bras de contact (51) étant reliée à une piste de contact associée (53) du support (13).

11. Commutateur de colonne de direction selon la revendication 10, **caractérisé en ce que** les bras de contact (51) de l'unité de contact (52) sollicitant les pistes de contact (53) du support (13) traversent un évidement (37) de l'organe de commutation rotatif (16) supporté dans le support (13).

12. Commutateur de colonne de direction selon les revendications 10 et 11, **caractérisé en ce que** l'unité de contact (52) comprend des branches de délimitation latérale (54) qui s'étendent sensiblement parallèlement aux bras de contact (51).

13. Commutateur de colonne de direction selon la revendication 12, **caractérisé en ce que** chaque branche (54) de l'unité de contact (52) comporte à son extrémité un plot cylindrique (55), les plots en vis-à-vis (55) s'engageant dans un évidement correspondant de l'organe de commutation rotatif (16) et les plots (55) à l'autre extrémité de l'unité de contact (52) s'engageant dans un évidement correspondant du pied (19).

14. Commutateur de colonne de direction selon la revendication 13, **caractérisé en ce que** les évidements dans l'organe de commutation rotatif (16), dans lesquels s'engagent les plots (55) de la branche (54) de l'unité de contact (52), sont des trous cylindriques (56).

15. Commutateur de colonne de direction selon la revendication 13, **caractérisé en ce que** les évidements dans le pied (19) du levier de commutation (18), dans lesquels s'engagent les plots (55) de la branche (54) de l'unité de contact (52), sont des trous oblongs (57).
